# EUROPEAN PATENT APPLICATION

(11) **EP 4 481 476 A1**
(43) Date of publication of application: **25.12.2024**
(21) Application number: 24183399.5
(22) Date of filing: 20.06.2024
(51) Int. Cl.: G02C 1/04, G02C 1/00, G02C 5/02, G02C 5/22

(54) **EYEWEAR LENS COUPLING MECHANISM**

(30) Priority: 21.06.2023 US 202363522291 P; 09.08.2023 US 202318232160
(71) Applicant: Marchon Eyewear, Inc., Melville, NY 11747 (US)
(72) Inventor: Conway, Charlotte, Melville, 11747 (US)
(74) Representative: 2s-ip Schramm Schneider Bertagnoll Patent- und Rechtsanwälte Part mbB

(57) **Abstract**

An eyewear assembly comprises: (1) an frame a left temple and a right temple, the frame comprising an outer lens loop support portion adjacent the left temple, the outer lens loop support defining a latching mechanism receiving recess; (2) a lens assembly comprising a lens and an outer lens loop defining a latching mechanism receiving cutaway, the latching mechanism receiving cutaway having a geometric profile that at least partially corresponds to a geometric profile of the latching mechanism receiving recess; and (3) a lens assembly latching mechanism rotatably coupled to the frame adjacent the left temple. In some embodiments, the lens assembly latching mechanism comprises: (1) a latching mechanism body; and (2) a latching mechanism protrusion that extends from the latching mechanism body, the matching mechanism protrusion having a geometric profile that at least partially corresponds to the geometric profile of the latching mechanism receiving cutaway.

## Description

### CROSS-REFERENCE TO RELATED APPLICATIONS

This application claims the benefit of U.S. Provisional Patent Application Serial No. 63/522,291, filed June 21, 2023, which is hereby incorporated herein by reference in its entirety.

### FIELD OF THE INVENTION

The present disclosure is generally related to a mechanism for coupling lenses to a pair of eyewear.

### BACKGROUND

A pair of eyewear typically includes one or more lenses, a frame, and one or more temple portions. A user of eyewear may desire to exchange lenses for different applications. As such, there is a need for improved mechanisms for coupling lenses to an eyewear frame.

### SUMMARY

Eyewear, according to various embodiments, comprises a frame comprising: (1) a bridge portion defining a left lens protrusion receiving recess and a right lens protrusion receiving recess; (2) a brow portion that extends bilaterally from the bridge portion; (3) a left lens loop support portion disposed adjacent a left end of the brow portion, the left lens loop support portion defining a left latching mechanism receiving recess; and (4) a right lens loop support portion disposed adjacent a right end of the brow portion, the right lens loop support portion defining a right latching mechanism receiving recess. In particular embodiments, the eyewear further comprises: (1) a left lens assembly latching mechanism rotatably coupled to the brow portion adjacent the left end of the brow portion, the left lens assembly latching mechanism comprising a left latching mechanism protrusion having a first profile that corresponds to a profile of the left latching mechanism receiving recess; (2) a right lens assembly latching mechanism rotatably coupled to the brow portion adjacent the left end of the brow portion, the right lens assembly latching mechanism comprising a right latching mechanism protrusion having a second profile that corresponds to a profile of the right latching mechanism receiving recess; (3) a left lens assembly; and (4) a right lens assembly. In various embodiments, the left lens assembly comprises: (1) a left inner eyewear frame engaging protrusion that extends inward from an upper portion of the left lens assembly; and (2) a left lens loop that extends outward from an upper portion of the left lens assembly, the left lens loop defining a left latching mechanism receiving cutaway having the first profile. In various embodiments, the right lens assembly comprises : (1) a right inner eyewear frame engaging protrusion that extends inward from an upper portion of the right lens assembly; and (2) a right lens loop that extends outward from an upper portion of the right lens assembly, the right lens loop defining a right latching mechanism receiving cutaway having the second profile. In particular embodiments: (1) the left lens protrusion receiving recess is configured to receive the left inner eyewear frame engaging protrusion; (2) the right lens protrusion receiving recess is configured to receive the right inner eyewear frame engaging protrusion; (3) the left lens assembly latching mechanism is configured to rotate between an unlatched position and a latched position in which the left latching mechanism protrusion extends through the left latching mechanism receiving cutaway and is at least partially received by the left latching mechanism receiving recess such that the left lens assembly latching mechanism is configured to maintain the left lens assembly adjacent the brow portion when the left lens inner eyewear frame engaging protrusion is disposed in the left lens protrusion receiving recess and the left lens assembly latching mechanism is in the latched position; and (4) the right lens assembly latching mechanism is configured to rotate between an unlatched position and a latched position in which the right latching mechanism protrusion extends through the right latching mechanism receiving cutaway and is at least partially received by the right latching mechanism receiving recess such that the right lens assembly latching mechanism is configured to maintain the right lens assembly adjacent the brow portion when the right lens inner eyewear frame engaging protrusion is disposed in the right lens protrusion receiving recess and the right lens assembly latching mechanism is in the latched position.

In some aspects, the left lens loop support portion defines a lower face and an upper face adjacent the left latching mechanism receiving recess, the left lens loop comprises an upper loop portion and a lower loop portion; and the left lens assembly latching mechanism defines an upper lens loop engaging portion and a lower lens loop engaging portion adjacent the left latching mechanism protrusion. In various embodiments, the upper loop portion is sandwiched between the upper face and the upper lens loop engaging portion when the left lens assembly latching mechanism is in the latched position, the lower loop portion is sandwiched between the lower face and the lower lens loop engaging portion when the left lens assembly latching mechanism is in the latched position. In particular embodiments, the left lens protrusion receiving recess and the right lens protrusion receiving recess are disposed on opposing portions of the bridge portion. In particular embodiments, the first profile is a mirror image of the second profile.

In particular embodiments, the right latching mechanism protrusion extends a first distance from a body of the right lens assembly latching mechanism; the right lens loop has a second thickness; and the first distance is greater than the second thickness. In various embodiments, the right latching mechanism receiving recess has a third depth, and the first distance is a distance that substantially corresponds to a combined distance of the second thickness and the third depth. In some embodiments, the left lens assembly comprises an upper frame engaging protrusion disposed along at least a portion of an upper edge of the left lens assembly, the frame defines an upper frame protrusion receiving recess along the brow portion that corresponds to the upper frame engaging protrusion, the upper frame protrusion receiving recess is configured to receive and support the upper frame engaging protrusion when the left lens inner eyewear frame engaging protrusion is disposed in the left lens protrusion receiving recess and the left lens assembly latching mechanism is in the latched position.

In some embodiments, the left lens assembly is configured to support a first lens, and the right lens assembly is configured to support a second lens. In various embodiments, the left lens assembly comprises the first lens, and the right lens assembly comprises the second lens. In particular embodiments, the left lens assembly consists of a first lens, and the right lens assembly consists of a second lens.

Eyewear with at least one exchangeable lens, in various embodiments, comprises an eyewear frame comprising: (1) a bridge defining an inner lens protrusion receiving recess; (2) a left brow portion and a right brow portion that extend from the bridge; and (3) an outer lens loop support portion that extends downward from an end portion of the left brow portion. In various embodiments, the eyewear further comprises a left lens comprising: (1) an inner eyewear frame engaging protrusion that extends from an upper right portion of the left lens by a first distance that corresponds to a depth of the inner lens protrusion receiving recess; and (2) an outer lens loop that extends from an upper right portion of the left lens and is formed by a lens loop lower portion, a lens loop outer portion, and a lens loop upper portion that define a latching mechanism receiving cutaway having a shape. In other embodiments, the eyewear comprises a lens assembly latching mechanism rotatably coupled to the end portion of the left brow portion comprising: (1) a latching mechanism body; and (2) a latching mechanism protrusion extending from the latching mechanism body at least a second distance that is greater than a thickness of the outer lens loop, the latching mechanism protrusion having the shape. In various embodiments, the inner lens protrusion receiving recess is configured to receive the inner eyewear frame engaging protrusion, and the lens assembly latching mechanism is configured to rotate such that the latching mechanism protrusion extends through the latching mechanism receiving cutaway when the inner eyewear frame engaging protrusion is disposed in the inner lens protrusion receiving recess.

An eyewear assembly, according to particular embodiments, comprises: (1) an eyewear frame comprising a left temple portion and a right temple portion, the eyewear frame comprising an outer lens loop support portion adjacent the left temple portion, the outer lens loop support portion defining a latching mechanism receiving recess; (2) a lens assembly comprising a lens and an outer lens loop defining a latching mechanism receiving cutaway, the latching mechanism receiving cutaway having a geometric profile that at least partially corresponds to a geometric profile of the latching mechanism receiving recess; and (3) a lens assembly latching mechanism rotatably coupled to the eyewear frame adjacent the left temple portion. In some embodiments, the lens assembly latching mechanism comprises: (1) a latching mechanism body; and (2) a latching mechanism protrusion that extends from the latching mechanism body, the matching mechanism protrusion having a geometric profile that at least partially corresponds to the geometric profile of the latching mechanism receiving cutaway. In some embodiments, the lens assembly latching mechanism is configured to rotate between an unlatched position and a latched position in which: (1) the latching mechanism protrusion extends through the latching mechanism receiving cutaway into the latching mechanism receiving recess; (2) the outer lens loop support portion engages the outer lens loop; and (3) the latching mechanism protrusion engages the latching mechanism receiving cutaway and at least a portion of the latching mechanism receiving recess such that the lens assembly latching mechanism maintains the outer lens loop against the outer lens loop support portion.

In some embodiments, the lens assembly comprises an eyewear frame engaging protrusion that extends from the lens assembly, the eyewear frame defines a lens protrusion receiving recess that corresponds to the eyewear frame engaging protrusion and is configured to receive the eyewear frame engaging protrusion; and the eyewear frame is configured to receive the eyewear frame engaging protrusion in the lens protrusion receiving recess when the lens assembly latching mechanism is in the latched position and supporting the lens assembly adjacent the eyewear frame. In other embodiments, the lens assembly comprises a lens frame portion, the lens frame portion is configured to support a lens within the lens frame portion, the eyewear frame engaging protrusion extends from the lens frame portion and the outer lens loop extends from the lens frame portion on an opposing portion of the lens frame portion from the eyewear frame engaging protrusion. In particular embodiments, the lens assembly is integrally formed with the lens frame portion and the lens.

In some embodiments, the outer lens loop support portion defines a first lens loop support surface around at least a portion of the latching mechanism receiving recess, the latching mechanism body defines a second lens loop support surface around at least a portion of the latching mechanism protrusion, and the second lens loop support surface sandwiches the outer lens loop against the first lens loop support surface when the lens assembly latching mechanism is in the latched position. In some aspects, the geometric profile is substantially D-shaped. In various embodiments, the latching mechanism protrusion extends a first distance from the latching mechanism body, the outer lens loop has a second thickness, and the first distance is greater than the second thickness. In some aspects, the latching mechanism receiving recess has a third depth, and the first distance is a distance that substantially corresponds to a combined distance of the second thickness and third depth. In particular embodiments, the lens assembly latching mechanism is configured to couple the lens assembly to and decouple the lens assembly from the eyewear frame via transition of the lens assembly latching mechanism between the unlatched and latched positions.

### BRIEF DESCRIPTION OF THE DRAWINGS

In the course of this description, reference will be made to the accompanying drawings, which are not necessarily drawn to scale, and wherein:
FIG. 1 is a front perspective view of a pair of eyewear according to various embodiments of the present disclosure;
FIG. 2 is a front perspective view of the pair of eyewear from FIG. 1, with the lens assembly decoupled from the eyewear frame according to various embodiments;
FIG. 3 is a front detail view of a lens in accordance with various embodiments;
FIG. 4 is a front detail view of the lens shown in FIG. 3 disposed adjacent an eyewear frame;
FIG. 5 is a detail view of a portion of an eyewear frame according to particular embodiments;
FIG. 6 is a detail view of a portion of an eyewear frame according to particular embodiments;
FIG. 7 is a front detail view of a lens assembly latching mechanism;
FIG. 8 is a rear detail view of the lens assembly latching mechanism of FIG. 7;
FIG. 9 is a top detail view of the lens assembly latching mechanism of FIG. 7;
FIG. 10 is a perspective view demonstrating a process for coupling a lens to a frame in accordance with various embodiments;
FIG. 11 is a side view of a pair of eyewear with a lens coupled to the eyewear using a latching mechanism;
FIG. 12 is a front detail view of a lens assembly according to particular embodiments; and
FIG. 13 is a front detail view of a lens assembly according to yet another embodiment.

### DETAILED DESCRIPTION

While this disclosure is illustrative of embodiments in many different forms, there are shown in the drawings, and will herein be described in detail, example embodiments of the disclosure with the understanding that the present disclosure is to be considered as illustrative of the principles of the disclosure but is not intended to limit the broad aspect of the disclosure to the embodiments illustrated. In the following description of various example structures according to the disclosure, reference is made to the accompanying drawings, which form a part hereof, and in which are shown by way of illustration various example devices, systems, and environments in which aspects of the disclosure may be practiced. It is to be understood that other specific arrangements of parts, example devices, systems, and environments may be utilized, and structural and functional modifications may be made without departing from the scope of the present disclosure.

In addition, it is to be understood that the phraseology and terminology employed herein are for the purpose of description and should not be regarded as limiting. For example, the use of a singular term, such as, "a" is not intended as limiting of the number of items. Also the use of relational terms, such as but not limited to, "top," "bottom," "left," "right," "upper," "lower," "down," "up," "side," are used in the description for clarity and are not intended to limit the scope of the disclosure. Further, it should be understood that any one of the features can be used separately or in combination with other features. Other systems, methods, aspects, features, and advantages of the disclosure will be or become apparent to one with skill in the art upon examination of the detailed description. It is intended that all such additional systems, methods, aspects, features, and advantages be included within this description, be within the scope of the present disclosure, and be protected by the accompanying claims.

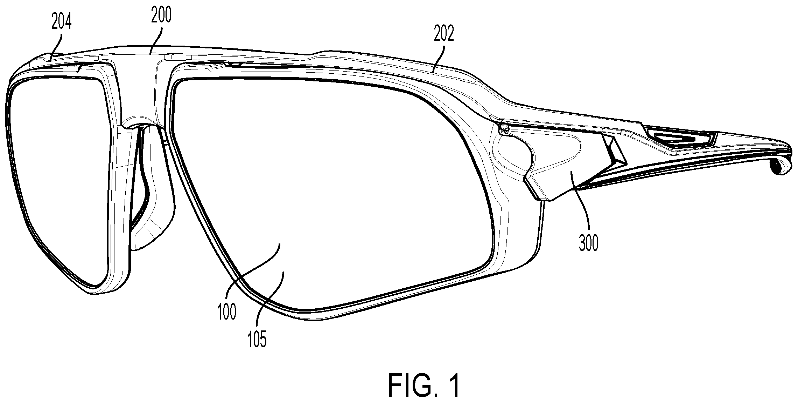

Various embodiments described herein provide eyewear 16 having removable lenses via a latching mechanism in various embodiments. In particular embodiments, as shown in FIG. 1, the eyewear 16 comprises a lens assembly 100 (e.g., for each respective eye), an eyewear frame 200, and a lens assembly latching mechanism 300 (e.g., for each respective lens assembly 100) configured to maintain each lens assembly 100 adjacent the eyewear frame 200. In various aspects, the eyewear frame 200 comprises a left brow portion 202 and a right brow portion 204 that respectively extend from a bridge portion of the eyewear frame 200. In some aspects, each lens assembly latching mechanism 300 is configured to couple (e.g., at least temporarily couple) each lens assembly 100 to the eyewear frame 200. In particular aspects, each lens assembly latching mechanism 300 is configured to cooperate with at least a respective portion of the eyewear frame 200 to couple each respective lens assembly 100 to the eyewear frame 200. In this way, the eyewear 16 is configured such that, through operation of the lens assembly latching mechanism 300, a user can couple and decouple each lens assembly 100 from the eyewear 16. The user may then replace the lens assembly 100 with a different lens assembly 100 (e.g., to include a particular lens assembly 100 that may have a different application). In this way, a user may utilize a single eyewear frame 200 with a plurality of different lenses and lens assemblies. This may include, for example, different applications (e.g., athletics vs. daily wear vs. aesthetics vs. sunglasses vs. prescription eyewear, etc.). In particular embodiments, the lens assembly latching mechanism 300 is integrated with a hinge of the eyewear frame 200 (e.g., hinge for folding and unfolding one or more temple portions of the eyewear frame 200). In other embodiments, the lens assembly latching mechanism 300 operates independently of the hinge of the eyewear frame 200.

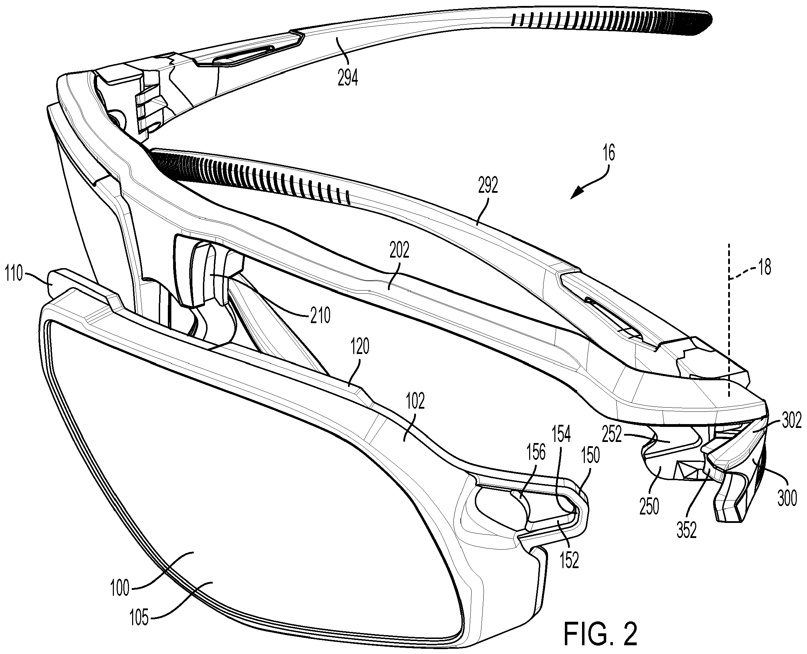

FIG. 2 depicts the eyewear 16 of FIG. 1, with the lens assembly 100 removed from the eyewear frame 200 and the lens assembly latching mechanism 300 in an open (e.g., unlatched) position. As may be understood from this figure, the lens assembly 100 comprises a lens frame portion 102 that holds a lens 105. In various embodiments, the lens frame portion 102 may have any suitable shape for serving as eyewear. In particular embodiments, the lens 105 may include any suitable lens 105 (e.g., a prescription lens, non-prescription, sunglass lens, polarized lens, etc.) with any suitable coating or curvature. In particular embodiments, the lens frame portion 102 is configured to maintain the lens 105 within the lens frame portion 102 such that user wearing the eyewear 16 would be looking through each lens 105 when the lens assembly 100 is coupled to the eyewear frame 200 (e.g., using the lens assembly latching mechanism 300). In some aspects, the lens 105 may be disposed in a recess defined by an inner portion of the lens frame portion 102.

As may be understood from FIG. 2 and FIG. 1, the eyewear frame 200 comprises a left temple portion 292 and a right temple portion 294. As may be understood by one skilled in the art, each of the left temple portion 292 and the right temple portion 294 are configured to maintain the 15 on a wearer's head (e.g., supported by the wearer's ears), while the wearer is wearing the eyewear 16. As shown in this figure, the left temple portion 292 is configured to rotate about an axis of rotation 18 (e.g., via suitable hinge)

As may be further understood from FIG. 2, the lens assembly 100 comprises an inner eyewear frame engaging protrusion 110 that extends outward from the lens frame portion 102 in a direction toward a bridge of the eyewear frame 200 (e.g., when the lens assembly 100 is coupled to the eyewear frame 200). In various aspects, the inner eyewear frame engaging protrusion 110 is sized and shaped to correspond to an inner lens protrusion receiving recess 210 defined by the eyewear frame 200. As will be understood in light of this description, the inner lens protrusion receiving recess 210 is configured (e.g., sized and shaped) to receive the inner eyewear frame engaging protrusion 110 in order to maintain the lens assembly 100 adjacent the eyewear frame 200 on the bridge-side of the eyewear frame 200 when the lens assembly 100 is coupled to the eyewear frame 200. In particular aspects, the inner lens protrusion receiving recess 210 defines a ledge configured to support the inner eyewear frame engaging protrusion 110 (e.g., and, by extension, the lens assembly 100). In various aspects, the inner lens protrusion receiving recess 210 and the lens assembly latching mechanism 300 are configured to cooperate to maintain the lens assembly 100 adjacent the eyewear frame 200 (e.g., couple the lens assembly 100 to the eyewear frame 200) when the inner eyewear frame engaging protrusion 110 is inserted into the inner lens protrusion receiving recess 210 and the lens assembly latching mechanism 300 is in a latched position.

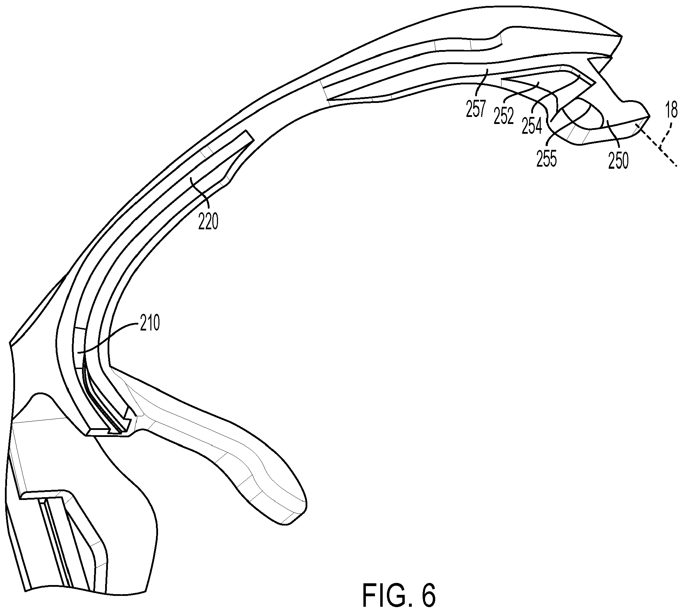

In particular aspects, the lens frame portion 102 further comprises at least one upper eyewear frame engaging protrusion 120 that extends upward from an upper face of the lens frame portion 102. In various aspects each upper eyewear frame engaging protrusion 120 corresponds to a recess and/or cutaway in the eyewear frame 200 (e.g., when the lens assembly 100 is coupled to the eyewear frame 200). In particular aspects, each upper eyewear frame engaging protrusion 120 may extend along at least a portion of the upper face of the lens frame portion 102. In some aspects, the upper eyewear frame engaging protrusion 120 may extend along an entire upper surface of the lens frame portion 102. In particular aspects, the portion of the lens frame portion 102 that does not include the upper eyewear frame engaging protrusion 120 may provide one or more gaps between the lens assembly 100 and the eyewear frame 200 when the lens assembly 100 is coupled to the eyewear frame 200. In some aspects, the one or more gaps may provide for airflow between the wearer's face and the front of the eyewear 16. In this way, the one or more gaps may reduce fogging on the lens 105 when the wearer is wearing the eyewear 16 (e.g., as a result of sweating, heat from the wearer's face, etc.). In particular embodiments, the geometry of the upper eyewear frame engaging protrusion 120 may correspond to the geometry of one or more recesses in the eyewear frame 200 that are configured to receive the upper eyewear frame engaging protrusion 120. In particular embodiments, the upper eyewear frame engaging protrusion 120 is sized and dimensioned such that, when the lens assembly 100 is coupled to the eyewear frame 200, at least a portion of the upper eyewear frame engaging protrusion 120 is disposed in the corresponding recess (pictured in FIG. 6 discussed below). In this way, the upper eyewear frame engaging protrusion 120 may cooperate with the corresponding recess to prevent forward and backward movement of a center portion of the lens assembly 100 when the lens assembly 100 is coupled to the eyewear frame 200. This arrangement may, for example, provide more rigidity to the lens assembly 100 when the lens assembly 100 is coupled to the eyewear frame 200.

In particular aspects, as shown in FIG. 2, the lens assembly 100 comprises an outer lens loop 150 disposed on an outer portion of the lens assembly 100 adjacent an upper portion of the lens assembly 100 (e.g., adjacent the left temple portion 292 and lens assembly latching mechanism 300 when the lens assembly 100 is coupled to the eyewear frame 200). As shown in this figure, the outer lens loop 150 comprises a substantially D-shaped loop having a lens loop outer portion 154. The outer lens loop 150 defines a latching mechanism receiving cutaway 152 configured to receive at least a portion of the lens assembly latching mechanism 300 when the lens assembly latching mechanism 300 is engaged and coupling the lens assembly 100 to the eyewear frame 200. The outer lens loop 150 further defines a latching mechanism receiving cutaway inner face 156. In various other aspects, the outer lens loop 150 may have any other suitable shape and may define any suitably-shaped latching mechanism receiving cutaway 152 for receiving at least a portion of the lens assembly latching mechanism 300 to couple the lens assembly 100 to the eyewear frame 200.

FIG. 2 further depicts the lens assembly latching mechanism 300 in an 'open' or unlatched position. In various aspects, the lens assembly latching mechanism 300 comprises a latching mechanism body 302 comprising a latching mechanism protrusion 352. In various aspects, the latching mechanism protrusion 352 is dimensioned to correspond to the latching mechanism receiving cutaway 152. In particular aspects, the latching mechanism protrusion 352 extends from an inner faces of the latching mechanism body 302. In some aspects, the latching mechanism protrusion 352 extends from the latching mechanism body 302 by a distance that is larger than a depth of the latching mechanism receiving cutaway 152. In this way, when the lens assembly latching mechanism 300 is in the latched position, the latching mechanism protrusion 352 extends through the latching mechanism receiving cutaway 152, protruding at least partially out of the latching mechanism receiving cutaway 152. In various embodiments, the latching mechanism protrusion 352 has dimensions and geometry that correspond sufficiently to the latching mechanism receiving cutaway 152 such that the lens assembly latching mechanism 300 maintains the outer lens loop 150 (e.g., and thereby the lens assembly 100) in a fixed position relative to the eyewear frame 200 when the lens assembly 100 is coupled to the eyewear frame 200 by the lens assembly latching mechanism 300. In some aspects, the latching mechanism protrusion 352 at least partially engages the lens loop outer portion 154 when the latching mechanism protrusion 352 is disposed in the latching mechanism receiving cutaway 152.

In some aspects, the eyewear frame 200 comprises an outer lens loop support portion 250 configured to support the outer lens loop 150 when the lens assembly 100 is coupled to the eyewear frame 200. As may be understood from FIG. 1 and FIG. 2, when the lens assembly 100 is coupled to the eyewear frame 200, the outer lens loop 150 is disposed against the outer lens loop support portion 250 and sandwiched between the outer lens loop support portion 250 and the latching mechanism body 302. The sandwiching of the outer lens loop 150 between the outer lens loop support portion 250 and the latching mechanism body 302 provide further stability to the lens assembly 100 in terms of maintaining the lens assembly 100 in a fixed position relative to the eyewear frame 200 when the lens assembly 100 is fixed to the eyewear frame 200, particularly in combination with the latching mechanism receiving recess 252 being disposed within the latching mechanism receiving cutaway 152. In particular embodiments the outer lens loop support portion 250 defines a latching mechanism receiving recess 252 configured to receive an end of the latching mechanism protrusion 352 (e.g., the end of the latching mechanism protrusion 352 that extends through the latching mechanism receiving cutaway 152 when the latching mechanism protrusion 352 is disposed in the latching mechanism receiving cutaway 152). In particular embodiments, the latching mechanism receiving recess 252 is sized and shaped to correspond to a geometry of at least a portion of the latching mechanism protrusion 352. In various aspects, the latching mechanism receiving recess 252 is configured to receive a portion of the latching mechanism protrusion 352 and maintain the latching mechanism protrusion 352 in a fixed position relative to the eyewear frame 200 in order to cooperate with the latching mechanism protrusion 352 to maintain the outer lens loop 150 in a fixed position (e.g., and thereby maintain the lens assembly 100 in a fixed, coupled position relative to the eyewear frame 200).

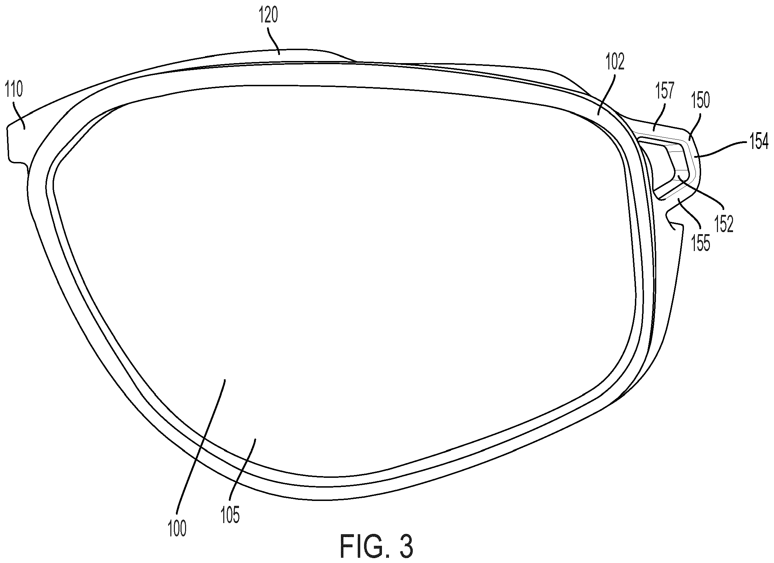

FIG. 3 depicts a front view of a lens assembly 100 according to a particular embodiment. As may be understood from this disclosure, the lens assembly 100 shown in this figure is a left lens assembly 100. In various aspects, a right 10 may have a structure that is substantially mirrored from the structure described with respect to the left lens assembly 100. As shown in this figure, the lens assembly 100 comprises a substantially geometrically shaped lens frame portion 102. In any aspect described herein, each the lens frame portion 102 (e.g., and therefore the lens assembly 100) may have any geometric shape that is suitable for use in eyewear (e.g., a substantially rectangular shape, a substantially square shape, a substantially round shape, a substantially aviator shape, a substantially oval shape, a substantially cat-eye shape, a substantially browline shape, a substantially oversized shape, or any other suitable shape. In various aspects, the geometrically shaped lens frame portion 102 may, for example, have a substantially hexagonal, octagonal, or other shape. In some aspects, the lens frame portion 102 may define any suitable combination of shapes or geometries (e.g., rounded bottom with angle top, combination of different shaped sides, etc.).

In particular aspects, the lens frame portion 102 may comprise an inner eyewear frame engaging protrusion 110 that extends inward (e.g., toward a bridge portion of the eyewear 16). In various aspects, the inner eyewear frame engaging protrusion 110 may have any suitable shape or dimensions. In some aspects, the inner eyewear frame engaging protrusion 110 corresponds in geometry to a recess disposed adjacent a bridge portion of the eyewear frame 200. In various aspects, the inner eyewear frame engaging protrusion 110 is configured to be disposed within the corresponding recess when the lens assembly 100 is coupled to the eyewear frame 200. In particular aspects, the inner eyewear frame engaging protrusion 110 is disposed on an upper right portion of the lens frame portion 102 (e.g., relative to a wearer of the eyewear when the wearer is wearing a pair of eyewear with the left lens assembly 100 in place).

In still other embodiments, the lens frame portion 102 comprise an upper eyewear frame engaging protrusion 120 that extends along at least a portion of the upper face of the lens frame portion 102 in an upward direction. In some aspects, the upper eyewear frame engaging protrusion 120 corresponds (e.g., in size, position and/or geometry) to a corresponding recess defined in the eyewear frame 200. In some aspects, the upper eyewear frame engaging protrusion 120 is configured for disposal within the corresponding recess while the lens assembly 100 is coupled to the eyewear frame 200. In some aspects, the upper eyewear frame engaging protrusion 120 is configured to provide rigidity to the lens assembly 100 when the lens assembly 100 is coupled to the eyewear frame 200 through engagement with the outer portions of the corresponding recess in the eyewear frame 200 in which it is disposed. In some aspects, the upper eyewear frame engaging protrusion 120 defines one or more air gaps (e.g., adjacent the upper eyewear frame engaging protrusion 120) when the lens assembly 100 is coupled to the eyewear frame 200.

As may be understood from FIG. 3, the lens frame portion 102 further comprises an outer lens loop 150 comprising a lens loop lower portion 155 and a lens loop upper portion 157. In the embodiment shown in this figure, the outer lens loop 150 is substantially D-shaped (e.g., D-shaped). In other embodiments, the outer lens loop 150 may have any other suitable shape. In particular embodiments, the lens loop lower portion 155 and lens loop upper portion 157 define an upper and lower surface configured to at least partially surround and engage a latching mechanism protrusion 352 in order to maintain the lens assembly 100 in a fixed position relative to an eyewear frame 200 when the lens assembly 100 is coupled to the eyewear frame 200. The lens loop lower portion 155 and lens loop upper portion 157 may (e.g., along with the lens loop outer portion 154), for example define the latching mechanism receiving cutaway 152 that receives the latching mechanism protrusion 352 during coupling of the lens assembly 100 to the eyewear frame 200.

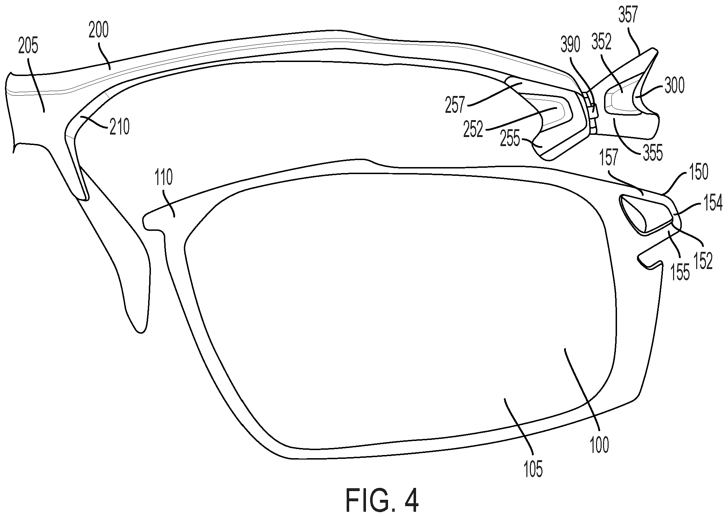

FIG. 4 depicts the lens assembly 100 in preparation for engagement with and coupling to the eyewear frame 200. As shown in this figure, the lens assembly 100 is a left lens assembly 100. In some aspects, the eyewear 16 may further comprise a right lens assembly 100 that is substantially mirrored from the structure described with respect to the left lens assembly 100. As shown in this figure, the lens assembly 100 is substantially geometrically shaped. In any aspect described herein, each lens assembly 100may have any geometric shape that is suitable for use in eyewear (e.g., a substantially rectangular shape, a substantially square shape, a substantially round shape, a substantially aviator shape, a substantially oval shape, a substantially cat-eye shape, a substantially browline shape, a substantially oversized shape, or any other suitable shape. In various aspects, the geometrically shaped lens assembly 100 may, for example, have a substantially hexagonal, octagonal, or other shape. In some aspects, the lens assembly 100 may define any suitable combination of shapes or geometries (e.g., rounded bottom with angle top, combination of different shaped sides, etc.).

In particular aspects, the lens assembly 100 may comprise an inner eyewear frame engaging protrusion 110 that extends inward (e.g., toward a bridge 205 of the eyewear 16). In various aspects, the inner eyewear frame engaging protrusion 110 may have any suitable shape or dimensions. In particular embodiments, the inner eyewear frame engaging protrusion 110 is dimensioned to correspond to the inner lens protrusion receiving recess 210 (e.g., such that the inner eyewear frame engaging protrusion 110 is at least partially disposed within and supported by the inner surface of the inner lens protrusion receiving recess 210 when the lens assembly 100 is coupled to the eyewear frame 200). In various aspects, the inner lens protrusion receiving recess 210 is configured to receive the inner eyewear frame engaging protrusion 110 and support the inner eyewear frame engaging protrusion 110 adjacent the bridge 205 of the eyewear frame 200 when the lens assembly 100 is coupled to the eyewear frame 200.

As may be further understood from FIG. 4, the lens assembly 100 comprises an outer lens loop 150 that extends from an upper left side of the lens assembly 100 (e.g., adjacent the temple portion of the eyewear frame 200 when the lens assembly 100 is coupled to the eyewear frame 200). In particular aspects, the outer lens loop 150 comprises a substantially D-shaped outer lens loop 150 that defines a latching mechanism receiving cutaway 152. In various aspects, the latching mechanism receiving cutaway 152 has a geometry that substantially corresponds to the geometry of the outer lens loop 150 and is defined by the lens loop lower portion 155, the lens loop upper portion 157, and the lens loop outer portion 154.

In particular aspects, the eyewear frame 200 comprises an outer lens loop support portion 250 configured to receive the outer lens loop 150 when the lens assembly 100 is coupled to the eyewear frame 200. As may be understood from this figure, the outer lens loop support portion 250 comprises a lens loop support portion lower face 255 and a lens loop support portion upper face 257 surrounding a latching mechanism receiving recess 252 defined on the outer lens loop support portion 250. As may be understood from FIG. 4, the lens loop support portion upper face 257 and the lens loop support portion lower face 255 are configured to engage the lens loop upper portion 157 and the lens loop lower portion 155 respectively when the outer lens loop 150 is disposed against the outer lens loop support portion 250 while the lens assembly 100 is coupled to the eyewear frame 200.

As may be further understood from FIG. 4, the lens assembly latching mechanism 300 is coupled to the eyewear frame 200 and configured to engage and latch onto the outer lens loop 150 in order to couple (e.g., at least temporarily couple) the lens assembly 100 to the eyewear frame 200 (e.g., by maintaining the outer lens loop 150 against the outer lens loop support portion 250 while the inner eyewear frame engaging protrusion 110 is at least partially disposed within the inner lens protrusion receiving recess 210). In particular embodiments, the lens assembly latching mechanism 300 comprise a latching mechanism protrusion 352 that is dimensioned to correspond to the latching mechanism receiving cutaway 152 and the latching mechanism receiving recess 252. In this way, when the lens assembly latching mechanism 300 is in a latched position, the latching mechanism protrusion 352 is configured to extend into and through the latching mechanism receiving cutaway 152 such that an inner surface of the latching mechanism protrusion 352 engages the latching mechanism receiving recess 252. The lens assembly latching mechanism 300 further defines an upper lens loop engaging portion 357 and a lower lens loop engaging portion 355 around the latching mechanism protrusion 352 that are configured to engage an outer portion of the lens loop upper portion 157 and lens loop lower portion 155 respectively when the outer lens loop 150 is disposed on the outer lens loop support portion 250 and the lens assembly latching mechanism 300 is in the latched position. In this way, when the outer lens loop 150 is disposed on the outer lens loop support portion 250 and the lens assembly latching mechanism 300 is latched such that the latching mechanism protrusion 352 is disposed within the latching mechanism receiving cutaway 152 and extending into the latching mechanism receiving recess 252: (1) the lens loop upper portion 157 is sandwiched between the lens loop support portion upper face 257 and the upper lens loop engaging portion 357; (2) the lens loop lower portion 155 is sandwiched between the lens loop support portion lower face 255 and the lens loop support portion lower face 255; (3) the latching mechanism receiving recess 252 is maintaining the outer lens loop 150 in a substantially fixed position on the outer lens loop support portion 250 (e.g., because the latching mechanism protrusion 352 fits sufficiently snugly within the latching mechanism receiving cutaway 152 of the outer lens loop 150 such that movement of the outer lens loop 150 with respect to the eyewear frame 200 is prevented); and (4) the extension of the latching mechanism protrusion 352 through the latching mechanism receiving cutaway 152 into the latching mechanism receiving recess 252 prevents lateral movement of the latching mechanism protrusion 352, further maintaining the outer lens loop 150 in a fixed position.

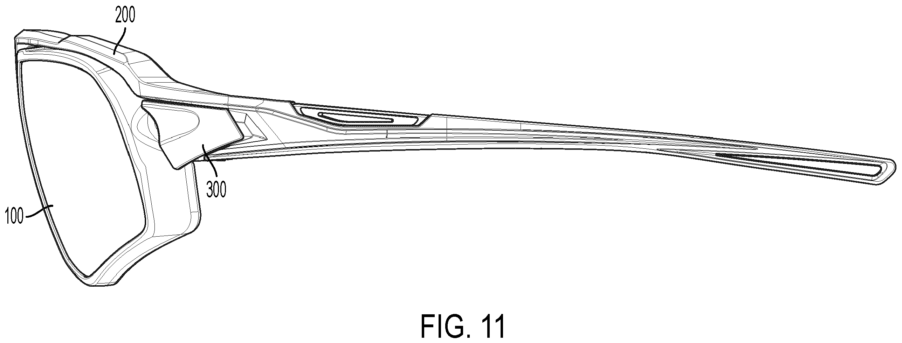

In particular embodiments, the lens assembly latching mechanism 300 comprises a hinge portion 390 configured to engage an eyewear hinge (e.g., an eyewear hinge that couples the left temple portion 292 to the body of the eyewear frame 200 on the left brow portion 202). In this way, the lens assembly latching mechanism 300 may be substantially seamlessly integrated into the eyewear 16 such that, when the lens assembly latching mechanism 300 is in the latched position, a user observing the eyewear may be unaware of the lens assembly latching mechanism 300 (e.g., the lens assembly latching mechanism 300 may appear to be integrally formed with the left temple portion 292 and/or the left brow portion 202 when the lens assembly latching mechanism 300 is in the latched position, as show in in FIG. 11).

As may be understood from this disclosure, the portion of the eyewear 16 shown in FIG. 4 (i.e., the left brow portion 202 of the eyewear frame 200 and associated left lens assembly 100 is described with respect to a left portion of the eyewear 16. In various aspects, the right portion of the eyewear 16 (e.g., right lens assembly 100, right lens assembly latching mechanism 300, etc.) may have a structure that corresponds to those portions described with respect to their left-sided counterparts (i.e., but having a mirrored and/or inverse structure. In this way, the eyewear 16 may be substantially symmetrically having substantially identical components on opposing portions of the eyewear that are flipped (e.g., about a center point or bridge 205 of the eyewear frame 200.

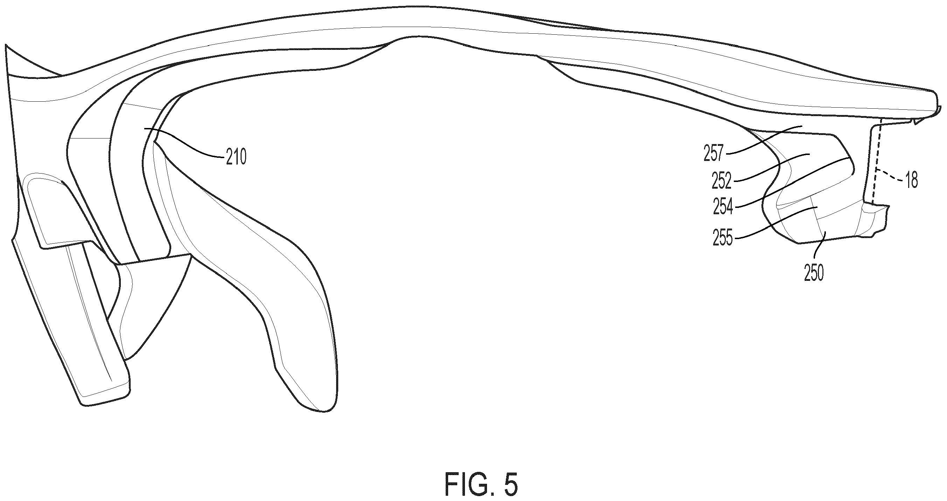

Turning to FIG. 5, the eyewear frame 200 is depicted with the lens assembly latching mechanism 300 removed. As may be understood from Fig. 5, the eyewear frame 200 defines the inner lens protrusion receiving recess 210 adjacent a bridge portion of the eyewear frame 200. As discussed herein, the inner lens protrusion receiving recess 210 is configured to receive a corresponding inner eyewear frame engaging protrusion 110 of the lens assembly 100 to cooperate with the lens assembly latching mechanism 300 to maintain the lens assembly 100 against the eyewear frame 200 (e.g., while a wearer is wearing the eyewear 16). As further depicted in FIG. 5, the outer lens loop support portion 250 is disposed adjacent an outte3r portion of the eyewear frame 200. In various aspects, the outer lens loop support portion 250 extends downward from an outer portion of a brow portion of the eyewear frame 200. In various aspects, the outer lens loop support portion 250 defines a latching mechanism receiving recess 252 having a latching mechanism receiving lip 254. As may be understood from this figure, the latching mechanism receiving recess 252 has a geometry that substantially corresponds to a geometry of at least a portion of the latching mechanism receiving recess 252 and the latching mechanism protrusion 352. In this way, when the latching mechanism protrusion 352 is extending through the latching mechanism receiving cutaway 152 and disposed in the latching mechanism receiving recess 252 , the latching mechanism receiving lip 254 engages the latching mechanism protrusion 352 to maintain the latching mechanism protrusion 352 within the latching mechanism receiving recess 252.

In various aspects, the outer lens loop support portion 250 defines a lens loop support portion upper face 257 and a lens loop support portion lower face 255 on either side of the latching mechanism receiving recess 252. As discussed above, each of the lens loop support portion upper face 257 and the lens loop support portion lower face 255 are configured to respectively engage (e.g., and mate with) the lens loop upper portion 157 and the lens loop upper portion 157 when the outer lens loop 150 is positioned on the outer lens loop support portion 250 (i.e., such that the latching mechanism receiving cutaway 152 aligns with the latching mechanism receiving recess 252). The eyewear frame 200 may further include a suitable hinge mechanism (e.g., which may create an axis of rotation 18 around which both a temple portion and/or the lens assembly latching mechanism 300 may pivot when the eyewear 16 is assembled).

FIG. 6 depicts an additional view of the eyewear frame 200. As shown in this figure, the eyewear frame 200 may define at least one upper lens protrusion receiving recess 220. Each upper lens protrusion receiving recess 220 may be configured to receive a corresponding upper eyewear frame engaging protrusion 120 as described above. In some aspects, each upper lens protrusion receiving recess 220 is defined in a bottom portion of the right brow portion 204.

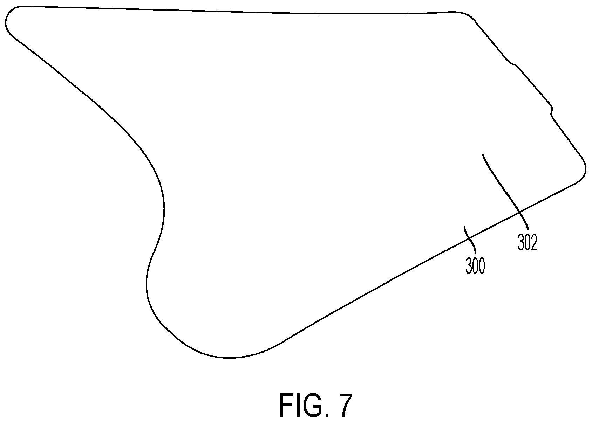

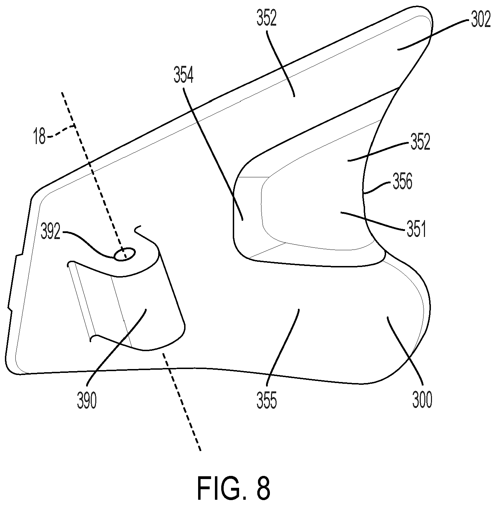

FIG. 7 depicts a front view of the lens assembly latching mechanism 300. As shown in this figure, the lens assembly latching mechanism 300 is substantially D-shaped. In other embodiments, the lens assembly latching mechanism 300 may have any other suitable shape that provides the geometry, in the form of a latching mechanism protrusion 352, configured to engage with both an outer lens loop 150 of a lens assembly 100 and a latching mechanism receiving recess 252 of an outer lens loop support portion 250 in order to maintain the lens assembly 100 in a coupled relationship with the eyewear frame 200. As shown in FIG. 7, the lens assembly latching mechanism 300 comprises a latching mechanism body 302. In various aspects, the latching mechanism body 302 has a substantially uniform thickness. In various embodiments, as shown in the rear view of the lens assembly latching mechanism 300 in FIG. 8, the lens assembly latching mechanism 300 comprises a latching mechanism protrusion 352 that extends perpendicularly from the latching mechanism body 302. As shown in the figures, the latching mechanism protrusion 352 has a shape that corresponds to the latching mechanism receiving cutaway 152 and extends from the latching mechanism body 302 by a distance that is greater than a thickness of the latching mechanism receiving cutaway 152. In this way, the latching mechanism protrusion 352, when disposed within the latching mechanism receiving cutaway 152, may extend through the latching mechanism receiving cutaway 152 to engage the latching mechanism receiving recess 252.

As may be further understood from FIG. 8, the lens assembly latching mechanism 300 comprises a hinge portion 390 that extends from the latching mechanism body 302 adjacent to and spaced apart from the latching mechanism protrusion 352. In various embodiments the 290 is configured to engage a hinge portion of the eyewear frame 200 to enable latching and unlatching of the lens assembly latching mechanism 300 (e.g., through rotation about an axis of rotation 18 through the hinge portion 390). As may be further understood from FIG. 8, the latching mechanism body 302 defines a lower lens loop engaging portion 355 and an upper lens loop engaging portion 357 adjacent either side of the latching mechanism protrusion 352. The latching mechanism protrusion 352 further defines a latching mechanism outer surface 354 and a latching mechanism inner surface 356 on opposing portions of the latching mechanism protrusion 352. The latching mechanism protrusion 352 further defines a latching mechanism protrusion face 351. In some embodiments, the hinge portion 390 is spaced apart from the latching mechanism protrusion 352 by a distance that substantially corresponds to a width of the lens loop outer portion 154. In this way, the latching mechanism protrusion 352 and hinge portion 390 may engage opposing portions of the 154 when the lens assembly latching mechanism 300 is in the latched position.

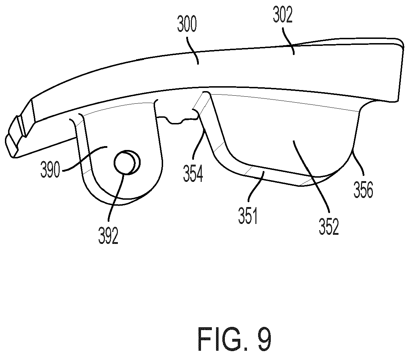

FIG. 9 depicts a top view of the lens assembly latching mechanism 300. As sown in this figure, the lens assembly latching mechanism 300 comprises the latching mechanism body 302, and the hinge portion 390 and latching mechanism protrusion 352 extend from the latching mechanism body 302. The hinge portion 390 defines a pin recess 392 configured to receive a pin, screw, or other mechanism to enable a hinging potion of the lens assembly latching mechanism 300 about an axis of rotation (e.g., the axis of rotation 18 shown in FIG. 8). The latching mechanism outer surface 354 and latching mechanism inner surface 356 of the latching mechanism protrusion 352 are shown in FIG. 9 and define the inner and outer surface of the latching mechanism protrusion 352. As may be understood from the figures, the latching mechanism outer surface 354 and latching mechanism inner surface 356 engage respective portions of the latching mechanism receiving cutaway 152 when the latching mechanism protrusion 352 is disposed in the latching mechanism receiving cutaway 152. The latching mechanism protrusion face 351 is similarly configured to engage the latching mechanism receiving recess 252 when the lens assembly latching mechanism 300 is in a closed, latched position (e.g., such that the latching mechanism outer surface 354 at least partially engages the latching mechanism receiving lip 254.

In some aspects, the latching mechanism protrusion 352 comprises rubber. In other aspects, the latching mechanism protrusion 352 has a rubber coating. In particular aspects, the lens assembly latching mechanism 300 is dual molded such that at least a portion of the lens assembly latching mechanism 300 comprises a first material (e.g.,. plastic, acrylic, metal, etc.), and a second portion of the lens assembly latching mechanism 300 (e.g., at least a portion of the latching mechanism protrusion 352) comprises a second material (e.g., rubber). In such embodiments, the latching mechanism protrusion 352 may include a suitable material for providing a friction fit with the latching mechanism receiving recess 252 (e.g., and/or any portion of the latching mechanism receiving cutaway 152). In some aspects, latching mechanism protrusion 352 may comprise a first material (e.g., rubber) that is forced with the latching mechanism body 302 such that first material extends through the latching mechanism body 302 to an outer face of the latching mechanism body 302 (e.g., in a shape that corresponds to a logo or other form of branding, such that the logo or other form of branding is visible as the second material on the latching mechanism body 302, surrounded by the second material).

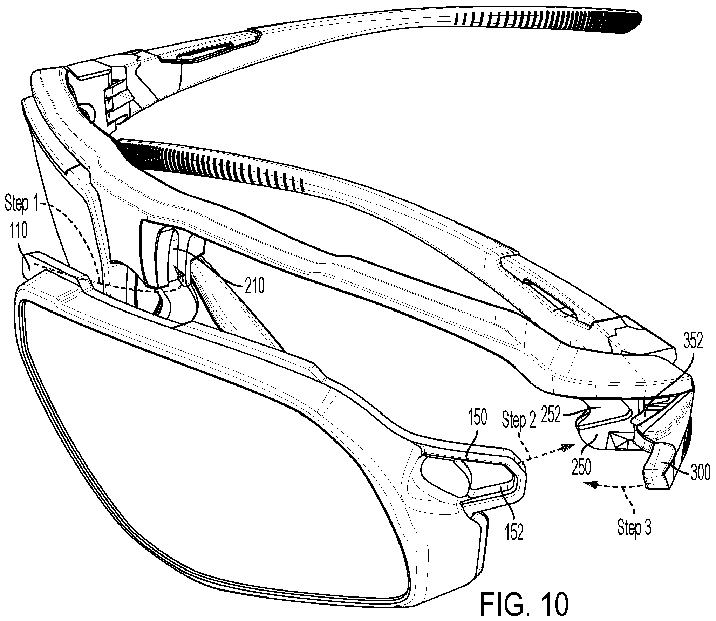

FIG. 10 depicts an exemplary set of eyewear 16 demonstrating a process for coupling the lens assembly 100 to the eyewear frame 200. As may be understood from FIG. 10, at Step 1, a use may insert the inner eyewear frame engaging protrusion 110 into the inner lens protrusion receiving recess 210 (e.g., such that the inner lens protrusion receiving recess 210 supports the inner eyewear frame engaging protrusion 110). As may be understood from FIG. 10, the inner lens protrusion receiving recess 210 restricts forward and back movement of the inner eyewear frame engaging protrusion 110 relative to the eyewear frame 200. In various aspects, the insertion of the inner eyewear frame engaging protrusion 110 into the inner lens protrusion receiving recess 210 may further limit flexion of the lens assembly 100 (i.e., because the inner lens protrusion receiving recess 210 engages the inner eyewear frame engaging protrusion 110 to maintain the portion of the lens assembly 100 adjacent the inner eyewear frame engaging protrusion 110 in a fixed position relative to the eyewear frame 200. Following insertion of the inner eyewear frame engaging protrusion 110 into the inner lens protrusion receiving recess 210, the user may position the outer lens loop 150 against the outer lens loop support portion 250 (e.g., such that the latching mechanism receiving cutaway 152 is at least substantially aligned with the latching mechanism receiving recess 252. In this way, when the latching mechanism protrusion 352 is inserted through the latching mechanism receiving cutaway 152, the latching mechanism receiving cutaway 152 may guide the latching mechanism protrusion 352 into the latching mechanism receiving recess 252. Next, at Step 3, the user may rotate the lens assembly latching mechanism 300 about an axis of rotation such that the latching mechanism protrusion 352 extends through the latching mechanism receiving cutaway 152 into the latching mechanism protrusion 352. In this way, the latching mechanism protrusion 352 may engage the latching mechanism receiving cutaway 152 to maintain the outer lens loop 150 in a fixed position against the outer lens loop support portion 250. Cooperation of the latched lens assembly latching mechanism 300 and the position of the inner eyewear frame engaging protrusion 110 in the inner lens protrusion receiving recess 210 may result in a coupling of the lens assembly 100 to the eyewear frame 200 in which the lens assembly 100 is maintained in a fixed position relative to the eyewear frame 200. The user may then reverse the steps shown in FIG. 10 to decouple the lens assembly 100 from the eyewear frame 200 (e.g. and replace the lens assembly 100 with a new lens assembly, etc.). FIG. 11 depicts a set of eyewear 16 with the lens assembly 100 coupled to the eyewear frame 200 via a lens assembly latching mechanism 300. As may be shown in this figure, when the lens assembly 100 is coupled to the eyewear frame 200 using the lens assembly latching mechanism 300, the set of eyewear 16 comprises a substantially cohesive set of eyewear 16 (e.g., such that a wearer of the eyewear 16 may not realize that the eyewear 16 comprises separate components).

### Alternative Embodiments

An eyewear assembly, according to various embodiments, comprises: (1) an eyewear frame comprising a left temple portion and a right temple portion, the eyewear frame comprising an outer lens loop support portion adjacent the left temple portion, the outer lens loop support portion defining a latching mechanism receiving recess; (2) a lens assembly comprising a lens and an outer lens loop defining a latching mechanism receiving cutaway, the latching mechanism receiving cutaway having a geometric profile that at least partially corresponds to a geometric profile of the latching mechanism receiving recess; and (3) a lens assembly latching mechanism rotatably coupled to the eyewear frame adjacent the left temple portion. In some aspects, the lens assembly latching mechanism comprises: (1) a latching mechanism body; and (2) a latching mechanism protrusion that extends from the latching mechanism body, the matching mechanism protrusion having a geometric profile that at least partially corresponds to the geometric profile of the latching mechanism receiving cutaway. In various aspects, as described herein, the lens assembly latching mechanism is configured to rotate between an unlatched position and a latched position. In particular embodiments, in the latched position: (1) the latching mechanism protrusion extends through the latching mechanism receiving cutaway into the latching mechanism receiving recess; (2) the outer lens loop support portion engages the outer lens loop; and (2) the latching mechanism protrusion engages the latching mechanism receiving cutaway and at least a portion of the latching mechanism receiving recess such that the lens assembly latching mechanism maintains the outer lens loop against the outer lens loop support portion.

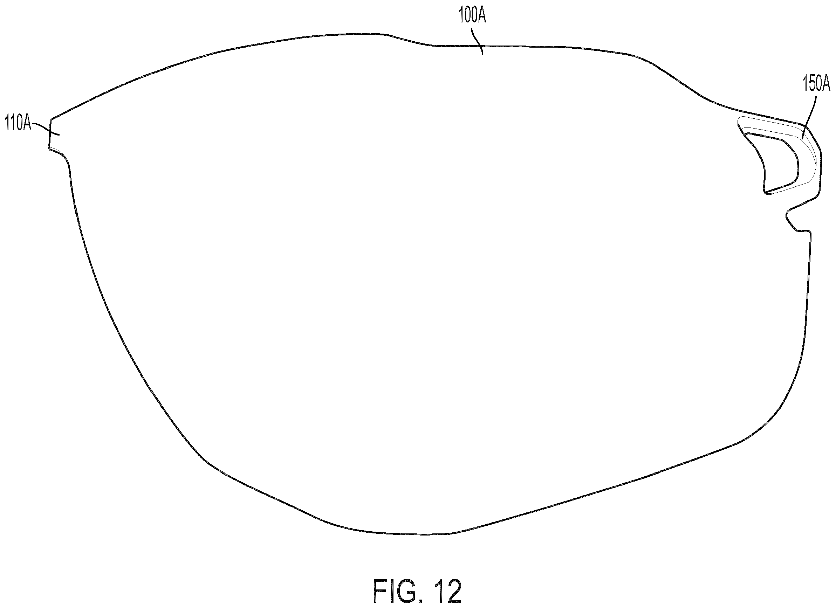

In some embodiments, as shown in FIG. 3, the lens assembly comprises a lens frame portion 102 configured to receive and support a lens 105. In other embodiments, as shown in FIG. 12, the lens assembly 100A comprises the lens. In such embodiments, the lens may be integrally formed with an inner eyewear frame engaging protrusion 110A and outer lens loop 150A, such that the lens assembly 100A defines a single piece of material, without a lens fame portion.

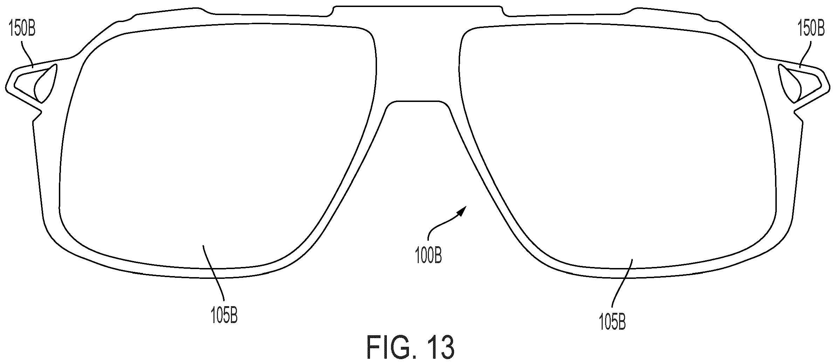

In still other embodiments, the eyewear frame comprises: (1) a second outer lens loop support portion adjacent the right temple portion, the second outer lens loop support portion defining a second latching mechanism receiving recess; (2) the lens assembly comprises a second outer lens loop defining a latching mechanism receiving cutaway, the second latching mechanism receiving cutaway having a geometric profile that at least partially corresponds to a geometric profile of the second latching mechanism receiving recess; and(3) the eyewear assembly further comprises a second lens assembly latching mechanism rotatably coupled to the eyewear frame adjacent the right temple portion. In such embodiments, the second lens assembly latching mechanism may comprise: (1) a second latching mechanism body; and (2) a second latching mechanism protrusion that extends from the second latching mechanism body, the second matching mechanism protrusion having a geometric profile that at least partially corresponds to the geometric profile of the second latching mechanism receiving cutaway. In particular embodiments, the second lens assembly latching mechanism is configured to rotate between an unlatched position and a latched position. In the latching mechanism, in some aspects: (1) the second latching mechanism protrusion extends through the second latching mechanism receiving cutaway into the second latching mechanism receiving recess; (2) the second outer lens loop support portion engages the second outer lens loop; and (3) the second latching mechanism protrusion engages the second latching mechanism receiving cutaway and at least a portion of the second latching mechanism receiving recess such that the second lens assembly latching mechanism maintains the second outer lens loop against the second outer lens loop support portion. FIG. 13 depicts an exemplary lens assembly 100B having left lens 105B and a right lens 105B. As shown in this figure, the lens assembly 100B further comprises a left outer lens loop 150B and a right outer lens loop 150A configured for coupling to the eyewear via respective lens assembly latching mechanisms (e.g., on opposing portions of an eyewear frame). In this way, the eyewear may include a single lens assembly 100B having respective lenses that are integrally formed as a single structure. In such embodiments, the eyewear frame may not define any inner lens protrusion receiving recesses, as they would not be necessary to maintain the lens assembly 100B adjacent the eyewear frame.

### CONCLUSION

One of ordinary skill in the art will recognize that the described examples are not limited to any particular size, shape, dimension, geometry, etc.. Further, one of ordinary skill in the art will recognize that the eyewear 16 (i.e., any components thereof) is not limited to any type of material. One of ordinary skilled in the art will recognize that a number of designs, types, and/or thicknesses of materials can be utilized when taking into consideration aesthetic, safety, and stability consideration. Similarly, a number of suitable fasteners and other coupling mechanisms may be employed for at least temporarily coupling and/or fastening one component to another (e.g., a frame portion to a temple portion or latching mechanism). A number of manufacturing techniques can be used in manufacturing eyewear and components thereof.

It will be appreciated by one of ordinary skilled in the art that changes can be made to the embodiments described herein without departing from the broad inventive concept thereof. It is understood, therefore, that the disclosure provided herein is not limited to the particular embodiments described and is intended to cover modifications within the spirit and scope of the present disclosure. Several alternative embodiments and examples have been described and illustrated herein. One of ordinary skill in the art can appreciate the features of the individual embodiments, and the possible combinations and variations of the components. One of ordinary skill in the art can further appreciate that any of the embodiments could be provided in any combination with the other embodiments disclosed herein.

## Claims

1. An eyewear assembly comprising:
an eyewear frame comprising a left temple portion and a right temple portion, the eyewear frame comprising an outer lens loop support portion adjacent the left temple portion, the outer lens loop support portion defining a latching mechanism receiving recess;
a lens assembly comprising a lens and an outer lens loop defining a latching mechanism receiving cutaway, the latching mechanism receiving cutaway having a geometric profile that at least partially corresponds to a geometric profile of the latching mechanism receiving recess; and
a lens assembly latching mechanism rotatably coupled to the eyewear frame adjacent the left temple portion, the lens assembly latching mechanism comprising:
a latching mechanism body; and
a latching mechanism protrusion that extends from the latching mechanism body, the latching mechanism protrusion having a geometric profile that at least partially corresponds to the geometric profile of the latching mechanism receiving cutaway, wherein:
the lens assembly latching mechanism is configured to rotate between an unlatched position and a latched position in which:
the latching mechanism protrusion extends through the latching mechanism receiving cutaway into the latching mechanism receiving recess;
the outer lens loop support portion engages the outer lens loop; and
the latching mechanism protrusion engages the latching mechanism receiving cutaway and at least a portion of the latching mechanism receiving recess such that the lens assembly latching mechanism maintains the outer lens loop against the outer lens loop support portion.

2. The eyewear assembly of claim 1, wherein:
the lens assembly comprises an eyewear frame engaging protrusion that extends from the lens assembly;
the eyewear frame defines a lens protrusion receiving recess that corresponds to the eyewear frame engaging protrusion and is configured to receive the eyewear frame engaging protrusion; and
the eyewear frame is configured to receive the eyewear frame engaging protrusion in the lens protrusion receiving recess when the lens assembly latching mechanism is in the latched position and supporting the lens assembly adjacent the eyewear frame.

3. The eyewear assembly of any one of claims 1 to 2, wherein:
the lens assembly comprises a lens frame portion;
the lens frame portion is configured to support a lens within the lens frame portion;
the eyewear frame engaging protrusion extends from the lens frame portion; and
the outer lens loop extends from the lens frame portion on an opposing portion of the lens frame portion from the eyewear frame engaging protrusion.

4. The eyewear assembly of claim 3, wherein the lens assembly is integrally formed with the lens frame portion and the lens.

5. The eyewear assembly of any one of claims 1 to 4, wherein:
the outer lens loop support portion defines a first lens loop support surface around at least a portion of the latching mechanism receiving recess;
the latching mechanism body defines a second lens loop support surface around at least a portion of the latching mechanism protrusion; and
the second lens loop support surface sandwiches the outer lens loop against the first lens loop support surface when the lens assembly latching mechanism is in the latched position.

6. The eyewear assembly of any one of claims 1 to 5, wherein the geometric profile is substantially D-shaped.

7. The eyewear assembly of any one of claims 1 to 6, wherein:
the latching mechanism protrusion extends a first distance from the latching mechanism body;
the outer lens loop has a second thickness; and
the first distance is greater than the second thickness.

8. The eyewear assembly of any one of claims 1 to 7, wherein:
the latching mechanism receiving recess has a third depth; and
the first distance is a distance that substantially corresponds to a combined distance of the second thickness and third depth.

9. The eyewear assembly of any one of claims 1 to 8, wherein the lens assembly latching mechanism is configured to couple the lens assembly to and decouple the lens assembly from the eyewear frame via transition of the lens assembly latching mechanism between the unlatched and latched positions.

10. The eyewear assembly of any one of claims 1 to 9, wherein:
the eyewear frame comprises a second outer lens loop support portion adjacent the right temple portion, the second outer lens loop support portion defining a second latching mechanism receiving recess;
the lens assembly comprises a second outer lens loop defining a latching mechanism receiving cutaway, the second latching mechanism receiving cutaway having a geometric profile that at least partially corresponds to a geometric profile of the second latching mechanism receiving recess; and
the eyewear assembly further comprises a second lens assembly latching mechanism rotatably coupled to the eyewear frame adjacent the right temple portion, the second lens assembly latching mechanism comprising:
a second latching mechanism body; and
a second latching mechanism protrusion that extends from the second latching mechanism body, the second matching mechanism protrusion having a geometric profile that at least partially corresponds to the geometric profile of the second latching mechanism receiving cutaway, wherein:
the second lens assembly latching mechanism is configured to rotate between an unlatched position and a latched position in which:
the second latching mechanism protrusion extends through the second latching mechanism receiving cutaway into the second latching mechanism receiving recess;
the second outer lens loop support portion engages the second outer lens loop; and
the second latching mechanism protrusion engages the second latching mechanism receiving cutaway and at least a portion of the second latching mechanism receiving recess such that the second lens assembly latching mechanism maintains the second outer lens loop against the second outer lens loop support portion.

11. Eyewear comprising:
a frame comprising:
a bridge portion defining a left lens protrusion receiving recess and a right lens protrusion receiving recess;
a brow portion that extends bilaterally from the bridge portion;
a left lens loop support portion disposed adjacent a left end of the brow portion, the left lens loop support portion defining a left latching mechanism receiving recess; and
a right lens loop support portion disposed adjacent a right end of the brow portion, the right lens loop support portion defining a right latching mechanism receiving recess;
a left lens assembly latching mechanism rotatably coupled to the brow portion adjacent the left end of the brow portion, the left lens assembly latching mechanism comprising a left latching mechanism protrusion having a first profile that corresponds to a profile of the left latching mechanism receiving recess;
a right lens assembly latching mechanism rotatably coupled to the brow portion adjacent the left end of the brow portion, the right lens assembly latching mechanism comprising a right latching mechanism protrusion having a second profile that corresponds to a profile of the right latching mechanism receiving recess;
a left lens assembly comprising:
a left inner eyewear frame engaging protrusion that extends inward from an upper portion of the left lens assembly; and
a left lens loop that extends outward from an upper portion of the left lens assembly, the left lens loop defining a left latching mechanism receiving cutaway having the first profile; and
a right lens assembly comprising:
a right inner eyewear frame engaging protrusion that extends inward from an upper portion of the right lens assembly; and
a right lens loop that extends outward from an upper portion of the right lens assembly, the right lens loop defining a right latching mechanism receiving cutaway having the second profile, wherein:
the left lens protrusion receiving recess is configured to receive the left inner eyewear frame engaging protrusion;
the right lens protrusion receiving recess is configured to receive the right inner eyewear frame engaging protrusion;
the left lens assembly latching mechanism is configured to rotate between an unlatched position and a latched position in which the left latching mechanism protrusion extends through the left latching mechanism receiving cutaway and is at least partially received by the left latching mechanism receiving recess such that the left lens assembly latching mechanism is configured to maintain the left lens assembly adjacent the brow portion when the left lens inner eyewear frame engaging protrusion is disposed in the left lens protrusion receiving recess and the left lens assembly latching mechanism is in the latched position; and
the right lens assembly latching mechanism is configured to rotate between an unlatched position and a latched position in which the right latching mechanism protrusion extends through the right latching mechanism receiving cutaway and is at least partially received by the right latching mechanism receiving recess such that the right lens assembly latching mechanism is configured to maintain the right lens assembly adjacent the brow portion when the right lens inner eyewear frame engaging protrusion is disposed in the right lens protrusion receiving recess and the right lens assembly latching mechanism is in the latched position.

12. The eyewear of Claim 11, wherein:
the left lens loop support portion defines a lower face and an upper face adjacent the left latching mechanism receiving recess;
the left lens loop comprises an upper loop portion and a lower loop portion; and
the left lens assembly latching mechanism defines an upper lens loop engaging portion and a lower lens loop engaging portion adjacent the left latching mechanism protrusion, wherein:
the upper loop portion is sandwiched between the upper face and the upper lens loop engaging portion when the left lens assembly latching mechanism is in the latched position; and
the lower loop portion is sandwiched between the lower face and the lower lens loop engaging portion when the left lens assembly latching mechanism is in the latched position.

13. The eyewear of any one of claims 11 to 12, wherein the left lens protrusion receiving recess and the right lens protrusion receiving recess are disposed on opposing portions of the bridge portion.

14. The eyewear of any one of claims 11 to 13, wherein:
the right latching mechanism protrusion extends a first distance from a body of the right lens assembly latching mechanism;
the right lens loop has a second thickness; and
the first distance is greater than the second thickness.

15. The eyewear of any one of claims 11 to 14, wherein:
the right latching mechanism receiving recess has a third depth; and
the first distance is a distance that substantially corresponds to a combined distance of the second thickness and the third depth.

16. The eyewear of any one of claims 11 to 15, wherein:
the left lens assembly comprises an upper frame engaging protrusion disposed along at least a portion of an upper edge of the left lens assembly;
the frame defines an upper frame protrusion receiving recess along the brow portion that corresponds to the upper frame engaging protrusion; and
the upper frame protrusion receiving recess is configured to receive and support the upper frame engaging protrusion when the left lens inner eyewear frame engaging protrusion is disposed in the left lens protrusion receiving recess and the left lens assembly latching mechanism is in the latched position.

17. The eyewear of any one of claims 11 to 16, wherein:
the left lens assembly is configured to support a first lens; and
the right lens assembly is configured to support a second lens.

18. Eyewear with exchangeable lens assembly comprising:
an eyewear frame comprising:
a bridge defining an inner lens protrusion receiving recess;
a left brow portion and a right brow portion that extend from the bridge; and
an outer lens loop support portion that extends downward from an end portion of the left brow portion, the outer lens loop support portion defining a latching mechanism receiving recess on a surface of the outer lens loop support portion;
a left lens assembly comprising:
an inner eyewear frame engaging protrusion that extends from an upper right portion of the left lens assembly by a first distance that corresponds to a depth of the inner lens protrusion receiving recess; and
an outer lens loop that extends from an upper right portion of the left lens assembly and is formed by a lens loop lower portion, a lens loop outer portion, and a lens loop upper portion that define a latching mechanism receiving cutaway, the latching mechanism receiving cutaway having a shape that at least partially corresponds to a shape of the latching mechanism receiving recess; and
a lens assembly latching mechanism rotatably coupled to the end portion of the left brow portion comprising:
a latching mechanism body; and
a latching mechanism protrusion extending from the latching mechanism body at least a second distance that is greater than a thickness of the outer lens loop, the latching mechanism protrusion having the shape, wherein:
the inner lens protrusion receiving recess is configured to receive the inner eyewear frame engaging protrusion; and
the lens assembly latching mechanism is configured to rotate such that the latching mechanism protrusion extends through the latching mechanism receiving cutaway at least partially into the latching mechanism receiving recess when the inner eyewear frame engaging protrusion is disposed in the inner lens protrusion receiving recess.

19. The eyewear with exchangeable lens assembly of claim 18, wherein the shape is substantially D-shaped.

20. The eyewear with exchangeable lens assembly of any one of claims 18 to 19, wherein:
the lens assembly latching mechanism comprises a hinge portion that extends from the latching mechanism body and is spaced apart from the latching mechanism receiving recess by a third distance that corresponds to a width of the lens loop outer portion;
the hinge portion is configured to integrate with a hinge of the eyewear; and
the latching mechanism protrusion and the hinge portion engage opposing portions of the lens loop outer portion when the lens assembly latching mechanism is positioned such that the latching mechanism protrusion extends through the latching mechanism receiving cutaway at least partially into the latching mechanism receiving recess and the inner eyewear frame engaging protrusion is disposed in the inner lens protrusion receiving recess.
